# EUROPEAN PATENT APPLICATION

(11) **EP 1 850 200 A2**
(43) Date of publication of application: **31.10.2007**
(21) Application number: 07251588.5
(22) Date of filing: 13.04.2007
(51) Int. Cl.: G05D 7/06

(54) **Control and monitoring apparatus for fluid dispensing means**

(30) Priority: 28.04.2006 GB 0608480
(71) Applicant: BRIGHTWELL DISPENSERS LIMITED, Newhaven, East Sussex BN9 0JF (GB)
(72) Inventor: Rossall, Jeremy Mark, Newhaven, East Sussex BN9 9BU (GB); Sallows, Geoffery, Seaford, East Sussex BN25 3HP (GB); Lewis, Andrew John, Seaford, East Sussex BN25 1DE (GB); Jones, Gary Brian, Falmer, East Sussex BN1 9PQ (GB)
(74) Representative: Bridge-Butler, Alan James

(57) **Abstract**

Control and monitoring apparatus (1) for fluid dispensing means (7) comprising a first electronic control means (2) and a second electronic control means (3,5), in which the first electronic control means is adapted to directly control and monitor fluid dispensing means with which the apparatus is used, in which the first electronic control means and the second electronic control means are connected by means of a remote communications link, and in which the second electronic control means is adapted to remotely control and monitor the first electronic control means.

## Description

This invention relates to a control and monitoring apparatus for fluid dispensing means, for use particularly, but not exclusively to control the dispensing of cleaning chemicals into washing machines and dishwashers and the like.

Domestic and industrial dishwashers and laundry washing machines use one or more different chemical substances to wash and rinse the objects placed in them. Such chemical substances can be detergents, soaps, rinse aids and so on, and are usually provided in a concentrated form to be diluted in water. In most machines these chemical substances are placed in a tray or tank and are circulated into the washing system via internal plumbing. Each particular substance is circulated at pre-determined intervals according to a washing and rinsing cycle.

However, the quantity of chemical substance used is not usually well controlled, and the same amount is often provided each time, when different wash cycles actually require differing amounts. In addition, it is common to provide too much or too little chemical.

If too much chemical is used for the wash cycle or the load, then it is clearly wasted, and such waste places an undue strain on the supply system. In addition, if too much chemical is used more spent chemical is drained into the waste water system than is necessary, which places an undue strain on the sewerage system, and can cause serious environmental damage.

These problems are exacerbated when the machines are industrial in size, and when large numbers of such machines are taken into consideration. It is common for a facility such as a hospital, or indeed a network of hospitals, to have large numbers of washing machines. If all these machines are used incorrectly, or inefficiently, then very large quantities of chemical substances can be wasted, and introduced to the sewerage system and the greater environment unnecessarily.

Therefore, it is known to provide industrial washing machines with improved aftermarket chemical dispensing systems. Such systems comprise external, electronically programmable pumps provided with a source of chemical, often from a large container. The pumps are integrated into the machine's control system so they operate when the machine requires an input of chemical substance. These retro-fit systems provide improved control of chemical input, and can be used to provide various different chemicals at different times. The best systems can be precisely controlled and can be set up to operate in a large number of different ways.

However, these systems only perform well if they are programmed and used effectively, and if their flexibility is utilised in full. Unfortunately it is very common for on site staff not to utilise the systems effectively, and to use the wrong programs. As a result the best washing cycles are not employed, and chemical substances are still wasted in large quantities.

The manner in which chemical substances are provided for large facilities today often involves a very basic supply and demand arrangement. A chemical supplier will arrange a contract with the user which involves a monthly payment, and the user will simply order the chemicals as and when they are needed. The monthly payments may be adjusted according to usage. Unfortunately, if the user is consuming too much chemical as a result of poor management or the incorrect use of the machines, it may not be apparent to the supplier. In addition, this arrangement places the burden of ordering more chemical on the user, and sometimes this is only done once the supply has expired. This leads to inconvenient periods of inactivity.

It is possible for the above described electronic chemical dispensing systems to record the manner and quantity of use. However, in order to gather all the information, and form an accurate large scale picture of the situation across a whole network, it is necessary to visit each individual site and to compile the data externally. Some supply contracts include hundreds and hundreds or sites, so this exercise can be very time consuming and expensive, and as a result is very rarely performed.

The present invention is intended to overcome some of the above problems.

Therefore, according to a first aspect of the present invention control and monitoring apparatus for fluid dispensing means comprises a first electronic control means and a second electronic control means, in which the first electronic control means is adapted to directly control and monitor fluid dispensing means with which the apparatus is used, in which the first electronic control means and the second electronic control means are connected by means of a remote communications link, and in which the second electronic control means is adapted to remotely control and monitor the first electronic control means.

The fluid dispensing means of the invention can be any apparatus which dispenses fluid for whatever reason. However, preferably the fluid dispensing means can comprise apparatus for dispensing cleaning chemicals and/or water into an associated washing machine, Such an apparatus can be a motorised pump, which can be connected to one or more drums of supply fluid, and to a water supply. Various bits of and tubing or pipework can connect all the components together.

Thus, the invention provides for the electronic control systems for industrial washing machines to be controlled and monitored from afar. This means a skilled engineer can set up the fluid dispensing means correctly to begin with, can examine the manner in which it is being used, and can adjust it accordingly.

The most important advantage of the invention is that very large quantities of environmentally damaging chemical substances can be prevented from being dumped unnecessarily into the waste water system.

In addition, the remote monitoring allows faults, misuse, and depleting chemical supplies to be identified and rectified immediately. This removes the burden of monitoring and ordering supplies from the user, and provides for ineffective usage to be quickly and easily identified. One particular ineffective usage which could be identified is the use of the fluid dispensing means at peak power and water consumption times, when the fluid dispensing means would be better operated at non peak times, for example at night. If peak time usage was identified and eliminated across a large network of machines, the cost savings and the reduction in demand on the local power and water supply infrastructure would be considerable.

Further, the chemical supplier can monitor the consumption of their product precisely, and can ensure that the right quantities and types of chemicals are being used.

In a preferred construction the first electronic control means can comprise controlling means to automatically periodically operate said fluid dispensing means according to a set of pre-programmed operating instructions, and to automatically control the duration of operation and/or the quantity of fluid dispensed according to said set of pre-programmed operating instructions.

This arrangement allows the first electronic control means to be set up precisely, so the fluid dispensing means dispenses exactly the right amount of fluid into an associated machine.

The first electronic control means can comprise monitoring means to automatically monitor the condition and operation of said fluid dispensing means according to a set of pre-programmed monitoring instructions, and to automatically store data relating to the condition and operation of said fluid dispensing means over a period of time according to said set of pre-programmed monitoring instructions.

This arrangement allows the first electronic control means to be set up to record any aspect of the operation of the fluid dispensing means for future examination. This includes all manually inputted commands.

In a preferred construction the system can be computerised, and a processing means can be used to control the apparatus, to gather and store the data, and to present the data in useful ways.

Therefore, the first electronic control means and/or the second electronic control means can comprise processing means adapted to calculate from said stored data the quantity of fluid which has been dispensed, and to issue a warning when a pre-determined quantity of fluid has been dispensed.

The quantity of fluid which has been dispensed can be calculated from data gathered by sensors monitoring fluid actually passing through the fluid dispensing means, or it can be calculated from data gathered by sensors monitoring the falling contents of an associated fluid drum.

This feature provides for a warning to be issued when the chemical supply is running low. The quantity of chemical which is on site can be provided to the processing means, and when the recorded usage indicates that it would be running low, the warning can be issued. Therefore, if the warning is connected to an associated ordering and dispatching system, the supply of replacement chemical can be entirely automated, and no user need ever run out.

Preferably the processing means can also be adapted to calculate from said stored data the duration of use of the fluid dispensing means and/or one or more components thereof, and to issue a warning when a pre-determined duration of use of the fluid dispensing means and/or one or more components thereof, has expired.

This feature provides for a warning to be issued when some part of the fluid dispensing means is reaching the end of its predicted useful life. Such a part may be a motor, a pump head or some piece of tubing. These predicted lifetimes can be provided to the processing means, and when the recorded usages indicates that a part may soon need to be replaced, the warning can be issued. Again, if the warning is connected to an associated ordering and dispatching system, the supply of required replacements parts can be entirely automated, and can be performed prior to any malfunction.

This feature prevents most occurrences of fatigue related component failure which would otherwise lead to the harmful leakage of fluid, which can damage surrounding equipment and the local environment.

Preferably the monitoring means can monitor one or more physical conditions of said fluid dispensing means and/or one or more components thereof, and the processing means can issue a warning if said one or more physical conditions of said fluid dispensing means and/or one or more components thereof, exceeds a pre-determined upper or lower limit.

This feature provides for a warning to be issued if any part of the fluid dispensing means breaks in use, for example if a motor fails or a piece of tubing splits. The upper and lower limits of correct use can be provided to the processing means, and if data from the monitoring means indicates that any of these limits have been exceeded, a warning can be issued. This arrangement also allows for abuse of the system to be identified and a warning issued. For example, an upper and lower limit can be set for the quantity of chemical dispensed by the apparatus manually. If an on-site user dispenses too much of a particular chemical into the machine, the warning can be issued, and appropriate action taken. Further, if an incorrect chemical is introduced to the system, again the warning can be issued.

In a preferred construction the fluid dispensing means can be provided with one or more emergency stop functions. Preferably a manually operable on-site emergency shut down system can be provided so the fluid dispensing means can be shut down by an on-site user in the event of any emergency.

In addition, two further automatic emergency stop functions can be provided. A first can shut down the pump if it fails or if a leak develops in the system, and a second can shut down the system and isolate any different supply fluids from one another in the event that the mains water supply stops. In normal use different chemicals might be added to water for use, but such chemicals might be a hazard if they mixed neat with one another, and therefore the second automatic emergency stop function prevents this.

The monitoring means can monitor the operational condition of said fluid dispensing means, and the processing means can issue a warning if any of the emergency stop functions are activated. This is an important feature as it provides for an expert to be notified immediately that the on site apparatus has shut down for whatever reason.

As indicated above, preferably the fluid dispensing means can be controlled manually on site by means of the first electronic control means. Therefore, the first electronic control means can further comprises means to facilitate direct manual operation of the fluid dispensing means, such that a desired quantity of fluid can be dispensed.

The processing means can be set up to issue a warning if the first electronic control means is manually operated outside of the parameters of said set of pre-programmed operating instructions.

In one arrangement the first electronic control means can be provided with a manual override, operation of which prevents the second control means from being able to control the first electronic control means.

This feature allows for greater control of the system, and allows an on-site operative to prevent potentially disruptive or damaging commands being sent from afar by an operative who may not be fully aware of the on-site situation. Further, an engineer using the second electronic control means at a different location can communicate with an on-site operative, perhaps by telephone, and can ask them to confirm the details of any situation, and to only remove the manual override when it is safe to do so.

In a preferred construction the second electronic control means can be adapted to facilitate the programming of said set of pre-programmed operating instructions, and said set of pre-programmed monitoring instructions. Further, these sets of instructions can be changed at any time via the second electronic control means.

The second electronic control means can also comprise a visualisation means, and the processing means can be adapted to create graphical visualisations on the visualisation means of said stored data such that characteristics of the operation and/or condition of the fluid dispensing means over a pre-determined time period can be viewed.

These graphical visualisations can be in the form of pie charts, block graphs, line graphs, spread sheets and such like. It is these presentations which allow the user to clearly see how their machines are being used, and in particular to identify ineffective use which can then be addressed. They also allow a user to clearly set out the financial situation with regard to the supply of the chemical substances.

In addition to the above, the processing means can also be adapted to create graphical visualisations on the visualisation means representing the real time operation and/or condition of the first electronic control means and the fluid dispensing means.

These graphical visualisations can be in the form of real-time updated figures or statistics, and also animated graphical representations of the actual machines themselves. The animated graphics can show the real-time operation of the machines.

These graphics allow a user to monitor exactly what is happening on site, and to carry out diagnostic work if required.

In a preferred construction the first electronic control means can be adapted to control and monitor fluid dispensing means comprising a number of separate fluid pumps.

The first electronic control means can comprise an electronic circuit housed in an outer container, which can be provided with input control keys and a screen. The second electronic control means can comprise a computer program run on a computer, which is provided with input control keys and a screen. This computer can be connected to the first electronic control mean by any remote communications link, for example an Internet telephone link.

Alternatively, the second electronic control means can comprise a computer program run on an Internet server, which program can be accessed and operated from anywhere on the Internet. As such, the second electronic control means would comprise the computer program run on the Internet server, and a computer program, such an Internet browser, run on a second remote computer. In such an arrangement the remote communications link between all the electronic control means can be an Internet link.

The warnings which are issued in certain conditions as described above can take the form of emails sent to the remote operator's computer, either via the Internet server or not as the case may be. The warnings could also take the form of text messages sent to mobile telephones. The technology to implement such arrangements is well known.

The invention also includes fluid dispensing means provided with the above described control and monitoring apparatus.

Therefore, according to a second aspect of the present invention fluid dispensing means comprises a first electronic control means, adapted to directly control and monitor said fluid dispensing means, and a second electronic control means adapted to remotely control and monitor the first electronic control means, in which the first electronic control means and the second electronic control means are connected by means of a remote communications link.

Further, the invention also includes controlling and monitoring apparatus as described above, but which controls and monitors first electronic control means and fluid dispensing means at more than one site.

Therefore, according to a third aspect of the present invention control and monitoring apparatus for a network of fluid dispensing means comprises two or more first electronic control means and a second electronic control means, in which each first electronic control means is adapted to directly control and monitor a fluid dispensing means with which it is used, in which each first electronic control means is connected to the second electronic control means by means of a remote communications link, and in which the second electronic control means is adapted to remotely control and monitor each first electronic control means.

In addition, the invention also includes the computer program which facilitates the operation of the second electronic control means.

Therefore, according to a fourth aspect of the present invention a computer program product carried by a carrier medium comprises a controlling sub-program, a monitoring sub program and a database sub program, in which when the computer program product is run on a computer, said computer is adapted to remotely control and monitor a first electronic control means adapted to directly control and monitor fluid dispensing means with which the first electronic control means is used.

The invention also includes various methods of using a control and monitoring apparatus as described above. The purpose of each method is as described above.

Therefore, according to a fifth aspect of the present invention a method of using control and monitoring apparatus for fluid dispensing means, in which the control and monitoring apparatus comprises a first electronic control means and a second electronic control means, in which the first electronic control means is adapted to directly control and monitor fluid dispensing means with which the apparatus is used, in which the first electronic control means and the second electronic control means are connected by means of a remote communications link, and in which the second electronic control means is adapted to remotely control and monitor the first electronic control means, includes the following steps:
i) Operating the second electronic control means such that a set of pre-programmed operating instructions is sent to the first electronic control means via the remote communications link;
ii) Operating the first electronic control means according to the set of pre-programmed operating instructions such that the first electronic control means automatically periodically operates said fluid dispensing means and automatically controls the duration of operation and/or the quantity of fluid dispensed.

In one embodiment the method can also include the following additional steps:
i) Operating the second electronic control means such that a set of pre-programmed monitoring instructions is sent to the first electronic control means via the remote communications link;
ii) Operating the first electronic control means according to the set of pre-programmed monitoring instructions such that the first electronic control means automatically monitors the condition and operation of said fluid dispensing means and automatically stores data relating to the condition and operation of said fluid dispensing means over a period of time.

In another embodiment the method can also include the following additional step:
i) Operating a processing means on the second electronic control means such that it calculates from said stored data the quantity of fluid which has been dispensed, and issues a warning when a pre-determined quantity of fluid has been dispensed.

In another embodiment the method can also include the following additional step:
i) Operating a processing means on the second electronic control means such that it calculates from said stored data the duration of use of the fluid dispensing means and/or one or more components thereof, and issues a warning when a pre-determined duration of use of the fluid dispensing means and/or one or more components thereof, has expired.

In another embodiment the method can also include the following additional step:
i) Operating the first electronic control means such that it monitors one or more physical conditions of said fluid dispensing means and/or one or more components thereof, and operating a processing means on the second electronic control means such that it issues a warning if said one or more physical conditions of said fluid dispensing means and/or one or more components thereof, exceeds a pre-determined upper or lower limit.

Finally, in one other embodiment the method can also include the following additional steps:
i) Operating the second electronic control means such that a further set of pre-programmed operating instructions is sent to the first electronic control means via the remote communications link;
ii) Operating the first electronic control means according to the further set of pre-programmed operating instructions.

The invention can be performed in various ways, but two embodiments will now be described by way of example, and with reference to the accompanying drawings in which:
Figure 1 is a diagrammatic view of a control and monitoring apparatus according to the first aspect of the present invention;
Figure 2 is a diagrammatic view of a control and monitoring apparatus according to the third aspect of the present invention;
Figure 3 is a first screen shot from an end-user's computer forming part of the control and monitoring apparatus as shown in Figure 2;
Figure 4 is a second screen shot from an end-user's computer forming part of the control and monitoring apparatus as shown in Figure 2;
Figure 5 is a third screen shot from an end-user's computer forming part of the control and monitoring apparatus as shown in Figure 2;
Figure 6 is a fourth screen shot from an end-user's computer forming part of the control and monitoring apparatus as shown in Figure 2;
Figure 7 is a flow diagram showing the steps of a method according to the fifth aspect of the present invention;
Figure 8 is a flow diagram showing the steps of a second method according to the fifth aspect of the present invention;
Figure 9 is a flow diagram showing the steps of a third method according to the fifth aspect of the present invention;
Figure 10 is a flow diagram showing the steps of a fourth method according to the fifth aspect of the present invention; and,
Figure 11 is a flow diagram showing the steps of a fifth method according to the fifth aspect of the present invention.

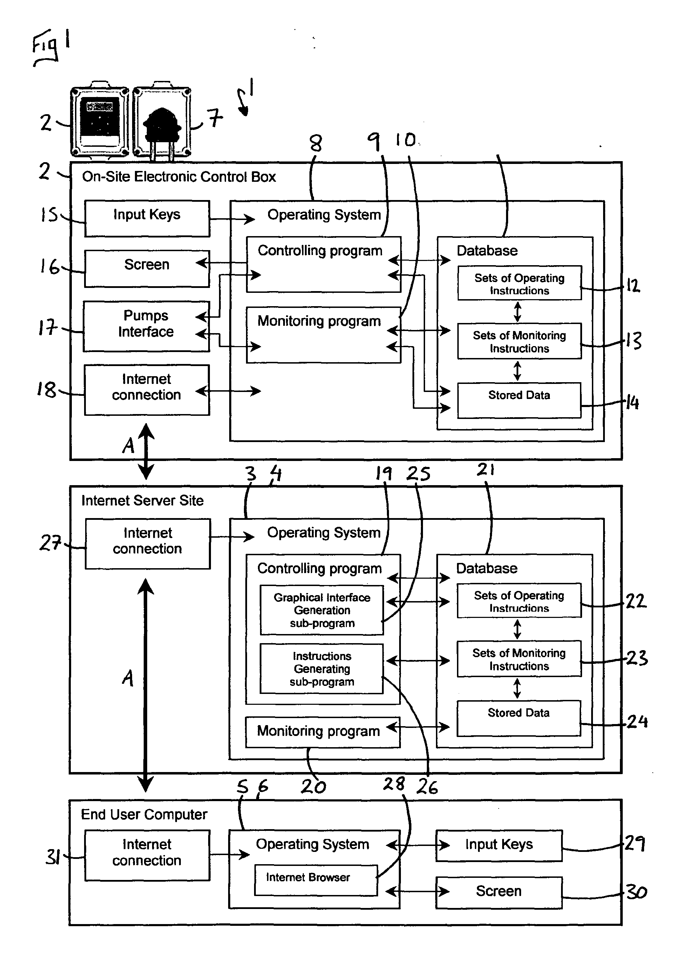

As shown in Figure 1, control and monitoring apparatus for fluid dispensing means 1 comprises a first electronic control means in the form of on-site electronic control box 2, and a second electronic control means in the form of operating system 3 supported by Internet server site 4 and operating system 5 supported by end user computer 6. As described below the first electronic control means (2) is adapted to directly control and monitor fluid dispensing means, in the form of fluid pump 7, with which the apparatus 1 is used. Further, the first electronic control means (2) and the second electronic control means (3, 5) are connected by means of a remote communications link, in the form of internet connections represented by arrows A. As also described below the second electronic control means (3, 5) is adapted to remotely control and monitor the first electronic control means (2).

The on-site electronic control box 2 (which is shown figuratively and diagrammatically in Figure 1) has an operating system 8 which is provided with a controlling program 9, a monitoring program 10 and a database 11. In use as described below the database stores sets of operating instructions 12, sets of monitoring instructions 13 and stored data 14 on the operation of the apparatus 1. The manner in which the operating system 8 and its sub programs is facilitated is well known and will not be further described here.

The on-site electronic control box 2 also has input keys 15, a screen 16, a pumps interface 17 and an Internet connection 18. Aside from the Internet connection, basic on-site electronic control boxes of this kind are generally known.

The Internet server site 4 supports operating system 3, which is provided with a controlling program 19, a monitoring program 20 and a database 21. In use as described below the database 21 stores sets of operating instructions 22, sets of monitoring instructions 23 and stored data 24 on the operation of the apparatus 1. In addition, the controlling program 19 is provided with a graphical interface generation sub-program 25, and an instructions generating sub-program 26. The manner in which the operating system 3 and its sub programs is facilitated is well known and will not be further described here.

The Internet server site 4 is obviously provided with an Internet connection 27, which facilitates connection to the on-site electronic control box 2 and the end user computer 6, as represented by arrows A.

The end user computer 6 is a known type of PC, and comprises operating system 5 with an internet browser 28, which facilitates interaction with the operating system 3 of the Internet server site 4. The PC also has a keyboard 29, a screen 30 and an Internet connection 31.

Figure 1 is a diagrammatic display showing one end user computer 6, and its connection through to one pump 7, at one site, which is the simplest arrangement of the invention. However, in practice a user of the apparatus of the invention would have many sites, each with many pumps. In addition, the end user computer 6 can be any computer in the world with an Internet connection and an Internet browser.

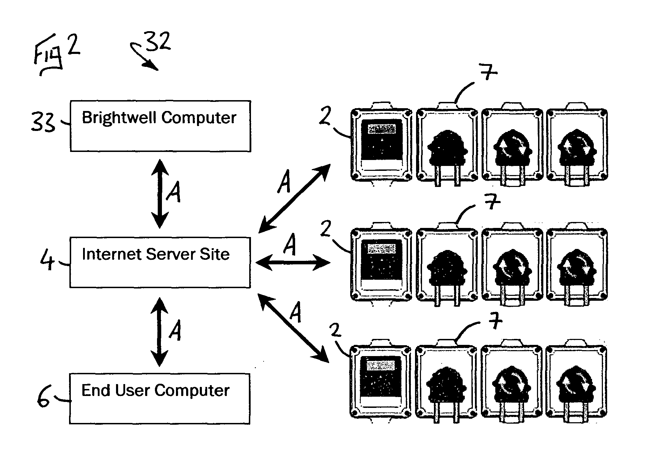

Therefore, the third aspect of the invention defines a controlling and monitoring apparatus for a network of fluid dispensing means, and a relatively simple version of such an arrangement is shown in Figure 2. In Figure 2 the same reference numerals as in Figure 1 are used for like parts. Figure 2 shows a controlling and monitoring apparatus for a network of dispensing means 32 comprising three on-site control boxes 2, each of which controls and monitors three pumps 7. Each on-site control box 2 is connected to an Internet server site 4 via the Internet, as represented by arrows A. An end user computer 6 is connected to the Internet server site 4 via the Internet A. Figure 2 also shows a service provider's computer 33, which is also connected to the Internet server site 4 in use, as described below.

The pump 7 forms part of apparatus (not shown) for dispensing cleaning chemicals and water into an associated washing machine. The apparatus comprises said pump 7, at least one drum of cleaning fluid and a connection to a water supply. Various bits of and tubing or pipework can connect all the components together.

There now follows a description of how the control and monitoring apparatus of the invention works in use. Although Figure 1 only shows one end user computer, and its connection through to one pump 7, it will be appreciated that exactly the same individual arrangement will occur when any end user computer is used to control and monitor any of the on-site control boxes 2, and any of the pumps 7 as shown in Figure 2. Therefore, the following description refers to both Figure 1 and 2 for explanation.

Once the apparatus 32 has been set up, and the Internet connections A are live, the apparatus 32 works as follows. An end user using the end user computer 6 accesses the operating system 3 of the Internet server site 4 using their Internet browser 28. This can be done in the known way, by entering the correct URL address for the site 4 into the Internet browser. (Preferably the operating system 3, and its facilities are password protected. Such protection systems are well known and do not form part of the invention, so are not further described here.)

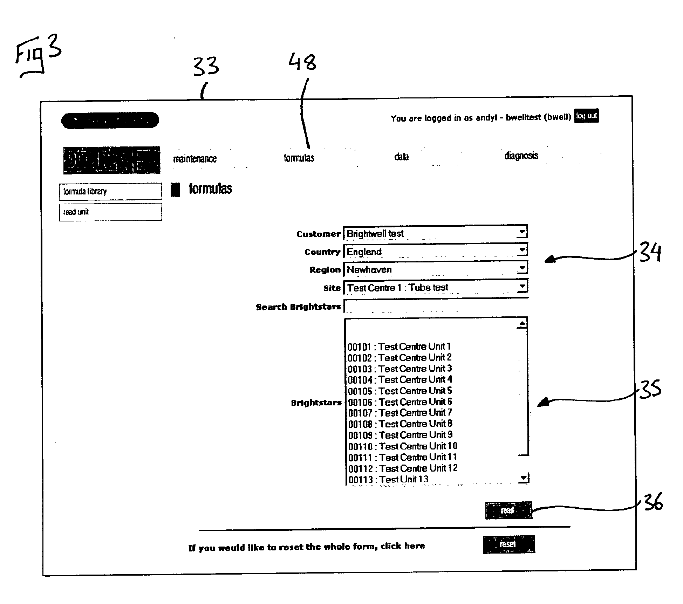

Once access is enabled, the end user can access the controlling program 19, and its sub-programs 25 and 26. Figure 3 shows a screen-shot of an opening menu screen 33 resented by the controlling program 19 to the end user, who views it on their screen 30. (This opening menu screen 33 would not be the very first thing the user would see, rather the user would navigate through the opening screens to this screen in the known way.)

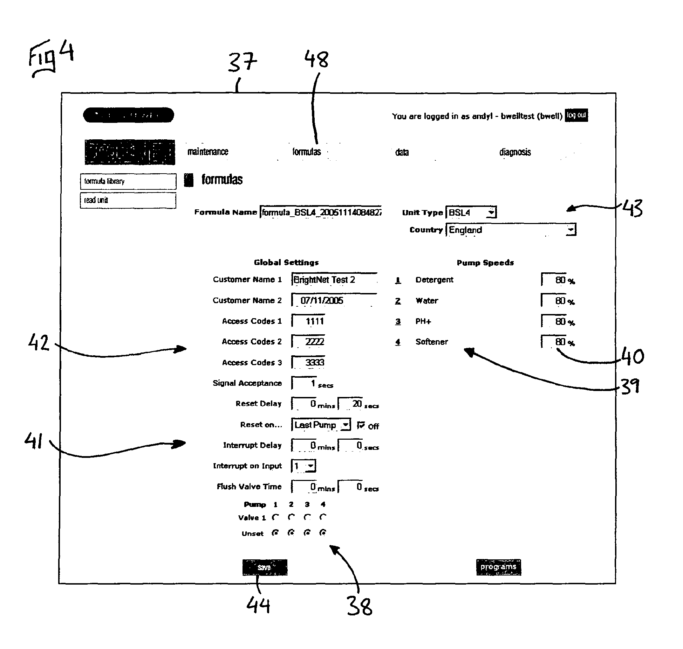

The opening menu screen 33 has a number or scrolling menu's which allow the end user to choose which of their pumps they wish to control and/or monitor. The end user chooses the location from the top four scroll menus 34, then chooses the particular on-site electronic control box from a further scroll menu 35. In this case the on-site electronic control boxes are referred to as "Test Centre Unit 1", "2", "3" and so on. The end user then clicks the "read" button 36, and is taken to an electronic control box menu 37, as shown in Figure 4.

The electronic control box menu 37, which in this case relates to "Test Centre Unit 2" comprises a number of scroll menus and boxes which allow the user to set the operation parameters for this on-site electronic control box. This box controls four pumps, as indicated at 38, and each of those four pumps is connected to different fluids, as indicated at 39. The speeds of the pumps can be set at the boxes 40, and the timings and duration of use can be set at the menus and boxes at 41. The user selects one of the pumps at 38, then applies the settings desired at 41.

The electronic control box menu 37 is also provided with access code requirements at 42, so only an end user with the correct codes can enter any changes. It is also possible to navigate directly to other units using the scroll menus at 43. Alternatively, the user can go back one page to the opening menu screen 33 to choose another on-site electronic control box.

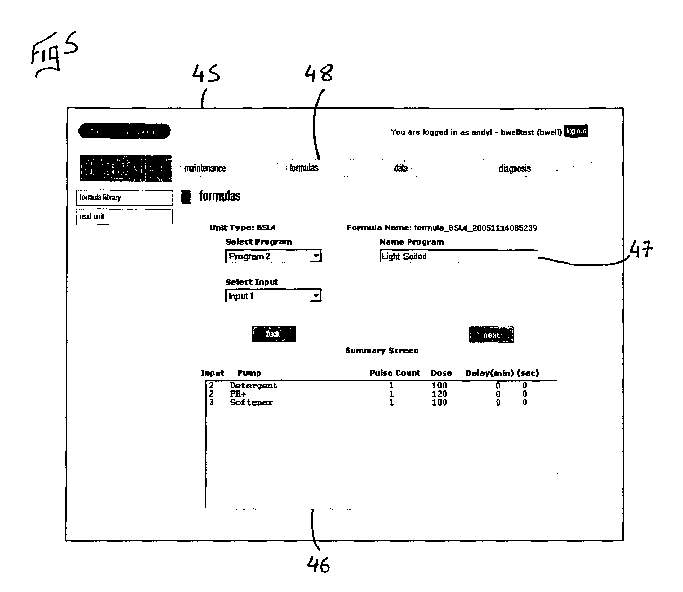

Once the end user is satisfied with the settings, they click the save button 44, and are taken to a settings summary screen 45 as shown in Figure 5. This screen presents a summary of the settings which have just been set at 46, and the user can give them a name and location at 47, so they can be saved to the database 21 as one set of operating instructions 22, as shown in Figure 1.

Other screens follow those described and allow the end user to choose which of their saved sets of operating instructions should be applied to each on-site electronic control box 2. When the appropriate set of operating instructions are chosen, they are sent via the Internet at A to the particular on-site electronic control box 2, where they stored in the database 11 as a set of operating instructions 12, and are applied to the particular pumps 7 via the pumps interface 17.

The user can also choose a set of operating instructions and apply it to several, or all their on-site electronic control boxes 2 at once to save time.

It will be appreciated that the above described arrangement allows for a very precise control of the pumps 7. The end user can set up their pumps from afar exactly as required for the particular usage on site, and they can then very easily amend those settings as and when required.

Most of the settings described above can also be set at the on-site electronic control boxes 2 themselves via the input keys 15 and the screen 16. However, as the on-site electronic control box 2 is not provided with a graphical PC style user interface, nor a regular key board, the inputting of such settings is far more complex and difficult. Further, obviously each on-site electronic control box 2 can only control the settings at that site, and not elsewhere.

More than one set of operating instructions 22 can be sent to the on-site electronic control box 2 and stored at 12. The end user can then pick the one they want by using the input keys 15 and the screen 16 and use it as required. This would be done in the case of a washing machine, which needs to be run in different ways to clean different loads. From afar the end user would not know which operating instruction was required, so an on-site operative would choose.

It will be appreciated that the software which facilitates the screens 33, 37 and 45 is the instructions generating sub-program 26 and the graphical interface generation sub-program 25, of the controlling program 19, as shown in Figure 1. It will also be appreciated that the software and programming required to create such screens and user-interfaces is well known. In addition, it will be appreciated that the available settings options and menu layout and so on can be altered as desired without departing from the invention.

As shown in the screens 33, 37 and 45, there are four main options for changing settings or reviewing data, and these are labelled "maintenance", "formulas", "data" and "diagnosis". The user can choose which area to go into by clicking the tabs at 48.

The above described screens 33, 37 and 45 are from the "formulas" section. The other sections have similar screens and menu choices to allow a user to set up the apparatus as they see fit with regard to its maintenance, diagnosis and data gathering and presentation.

In the maintenance section the user can set a number of parameters relating to the maintenance of each of their on-site electronic control boxes 2 and their associated pumps 7. These parameters are stored in the database 21.

These parameters include setting a time for a warning to be issued when a certain quantity of fluid has been dispensed by any given pump 7. The quantities dispensed are measured by sensors on the pumps 7 and this data is processed by the monitoring program 10, and stored in the database 11. This data is periodically sent to the monitoring program 20, which stores it in the database 24, so the user can view it.

The maintenance section also allows for the exact quantities dispatched to each site to be programmed in, and therefore the warning can be issued when the controlling program 19 calculates from the stored data 24 that a particular chemical substance is running low at any given site. It can therefore be ordered and dispatched before it runs out. The warning can be in the form of an email to a given email address, or even a text to a mobile telephone. The technology to facilitate such arrangements is known. The warning can also be given on site where the controlling program 9 can perform the same calculations with the stored data 14.

A log of the chemicals which are used at any site is created and can be viewed to get an overview of consumption at one or more sites.

In addition, the programmable parameters of the maintenance section allow for a warning to be issued when any of the on site components has been used for a certain length of time. The particular components in use and their life-expectancy is logged in the database 21 by the controlling program 19, and the duration of use is calculated from data sent by sensors on the pumps 7 to the monitoring program 10 and the database 11, and from there to the monitoring program 20 and the database 21. The controlling program 19 then calculates from that stored data 24 when a particular component will soon need replacing. It can therefore be ordered and dispatched before it expires. Again the warning can be in the form of an email to a given email address, or a text to a mobile telephone. Again if the same instructions are sent to the controlling program 9, it can perform the same function on site. As above a log is kept of all this activity.

Further, the programmable parameters of the maintenance section also allow for warnings to be issued if any of the on-site components fails in use. Data from sensors on the pumps 7 generally comprises flow rate data, motor operational data and fluid composition data, and if such data is out of line with what it should be according to the in use set of operating instructions, then this indicates that there has been a failure. For example, if the pump is supposed to pump 100ml of detergent over five seconds, but the sensors indicates that only 50ml has passed through the pump in that time, this could indicate a leak upstream of the pump, a blockage downstream of the pump, or a motor failure.

Therefore, the maintenance section comprises screens in which a user can use the controlling program 19 to program in a set of upper and lower limits for operation, for example a 5 or 10 per cent variation in the data from the sensors against the flow rates expected from a given set of operating instructions. The controlling program 19 calculates from the incoming data from the on-site electronic control box 2 if it exceeds the programmed limits, and if so, it issues a warning as described above. Alternatively, the controlling program 19 can change the pump settings automatically to overcome the problem. For example, if the pump is supposed to pump 100ml of detergent over five seconds, but the sensors indicate a variation in excess of the upper and lower limit, but not so far in excess to indicate a failure, the pump could be speeded up or slowed down to compensate for the divergence. Again, the warning can also be issued on site, and a log is kept of all this activity.

In addition to issuing a warning when a fault occurs, this system will also issue a warning if the pumps are abused on site, by being manually run for longer than the set of operating instructions provides, or by being used to pump the incorrect fluid, and the appropriate action can then be taken. The on-site electronic control box 2 can be manually operated on site as described below.

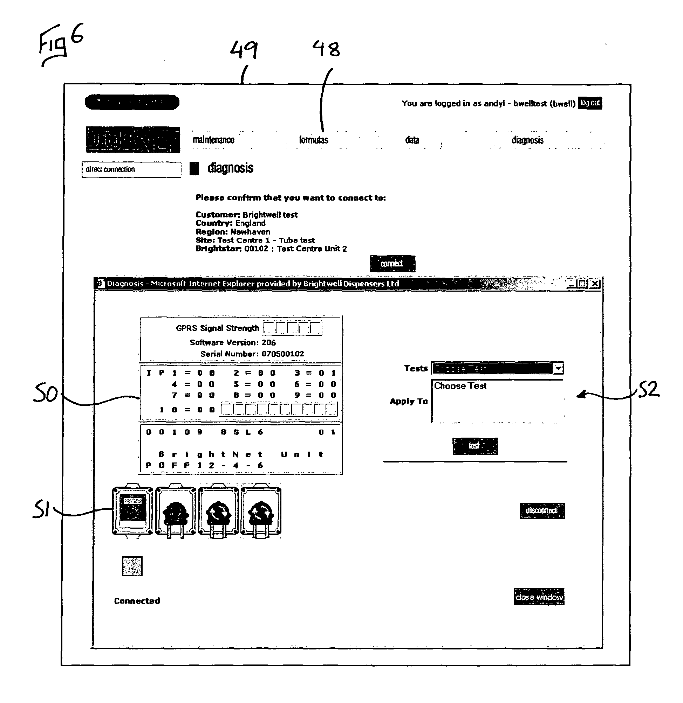

In the "diagnosis" section referred to above, the end user can review the real-time condition of any of their pumps 7. Figure 6 shows a diagnosis screen 49 for a particular on-site electronic control box 2 and its three pumps 7. The user can navigate to any of their boxes from a menu screen much like that shown in Figure 3.

The diagnosis screen 49 comprises a box 50 of figures which relate to the real-time flow rates in any of the pumps 7. In addition, a figurative display 51 shows the pumps, and indicates with rotational arrows if any of them are running at the time.

This diagnostic display allows the end user to see if a pump has failed, and allows the user to run one or more of the pumps to test them. Testing sequences can be chosen from scroll menus at 52.

In the "data" section referred to above, the end user can review the stored data 24, and can set parameters for the manner in which the on-site electronic control boxes 2 and the pumps 7 are monitored by the monitoring programs 20 and 10.

The screens in the "data" section which relate to the programming of the sets of monitoring instructions 23 are much like those described above in relation to the programming of the sets of operating instructions 22. The user navigates through the screens to choose any given on-site electronic control box 2, and can set which sensors are to run, when they run, and when the data is sent from the site back to the Internet server site 4.

In addition, the "data" section comprises screens which present the stored data 24, such as the above referred to logs, in consumable ways. For example, the controlling program accesses the stored data 24 and creates pie charts, block graphs, line graphs and so on from the data using the graphical interface generation sub program 25, as instructed by the end user.

These presentations can show how much chemical substances are being used, when the pumps 7 are being run, which sets of operating instructions are being used and so on. Thus, the end user can identify ineffective use, for example the use of the same set of operating instructions over and over when different ones should be used; the use of the machine too often, for example three of four times a day when only once is necessary, and the use of the machine during peak times when off-peak times would be advantageous.

Thus, the end user can precisely control the sets of operating instructions and monitoring instructions, they can be made away or emergencies or faults, and they can monitor the on-site usage of their products, in order to improve it.

The controlling programs 9 and 19 are also provided with emergency stop functions to be used in the event of an emergency, such as a leak or the like. The end user can initiate a manual emergency stop via one of the Internet server site screens, and an on-site operator can initiate one via one of the input keys 15. In addition, two further automatic emergency stop functions are integrated into the on-site equipment. A first emergency stop function shuts down the pump 7 if it fails or if a leak develops somewhere in the system. The controlling program 9 initiates such a shut down if incoming data from the pump 7 suggests a malfunction. A second emergency stop function shuts down the pump 7 and isolates any different supply fluids from one another in the event that the mains water supply stops. The controlling program 9 initiates such a shut down if incoming data from sensors (not shown) indicates such an occurrence.

If the emergency stop is initiated on site the monitoring program 10 records it, and that information is relayed to the monitoring program 20. The controlling program 19 then issues a warning, which is sent via email or text message as described above to the end user. This way if an emergency occurs when the end user is not on line, they can be notified and can take immediate action by going on line to asses the problem, and perhaps correct it with an amended set of operating instructions.

The on-site electronic control box 2 is also provided with a manual override which prevents any instructions from the Internet server site from being initiated on site. If the manual override is initiated the end user is made aware because the monitoring program 20 logs that action.

Whilst the Internet server site 4 provides a wealth of information about the situation on site, there may be factors which are only apparent to those who are actually there. Therefore, when a diagnostic test is carried out, or a new set of operating instructions is sent in order to overcome a given problem, the on-site operator can manually allow such things to proceed, or can stop them with the manual override if they inadvertently make the situation worse.

In line with the above, and as indicated elsewhere above, the on-site electronic control box can be fully controlled on site. This is obviously necessary to allow an on-site operator to choose an appropriate set of operating instructions as required, and also allows the manual emergency stop to be initiated.

The monitoring program 20 monitors all the information which is sent from the on-site electronic control box 2, so the end user can see if any manual inputs are incorrect or constitute an abuse of the system, by entering the "data" section as described above.

It will be appreciated that the Internet server site 4 can be accessed by any computer with an Internet connection and browser. This allows the end user to monitor their equipment from anywhere. It also allows a provider of the apparatus to monitor the end-user's activities, and to assist if help is required. As shown in Figure 2, this would be done by means of the service provider's computer, the Brightwell computer 33, connecting to the Internet server site 4 and navigating through all the screens and looking at all the available data. The service provider has enhanced access to the site, and can control and modify it in the manner of an administrator.

The invention also includes fluid dispensing means comprising, a first electronic control means, adapted to directly control and monitor said fluid dispensing means and a second electronic control means adapted to remotely control and monitor the first electronic control means, in which the first electronic control means and the second electronic control means are connected by means of a remote communications link. This is clearly supported by Figure 1, in which the control and monitoring apparatus 1 is shown in use with the pump 7.

The invention also includes control and monitoring apparatus for a network of fluid dispensing means, and as described above this is shown in Figure 2.

The invention also includes a computer program product carried by a carrier medium, comprising a controlling sub-program, a monitoring sub program and a database sub program, in which when the computer program product is run on a computer, said computer is adapted to remotely control and monitor a first electronic control means adapted to directly control and monitor fluid dispensing means with which the first electronic control means is used. This computer program product is supported by the controlling program 19, monitoring program 20 and database 21 as shown in Figure 1. It will be appreciated that these programs can be readily carried on a carrier medium, and loaded onto an Internet server site, as shown in Figure 1.

The invention also includes a method of using control and monitoring apparatus for fluid dispensing means, as described above. The method includes operating the second electronic control means such that a set of pre-programmed operating instructions is sent to the first electronic control means via the remote communications link; then operating the first electronic control means according to the set of pre-programmed operating instructions such that the first electronic control means automatically periodically operates said fluid dispensing means and automatically controls the duration of operation and/or the quantity of fluid dispensed.

This method is supported by the above description, which describes how a set of pre-programmed operating instructions are created using the controlling program 19, and how those instructions are sent to the on-site electronic control box 2 and used.

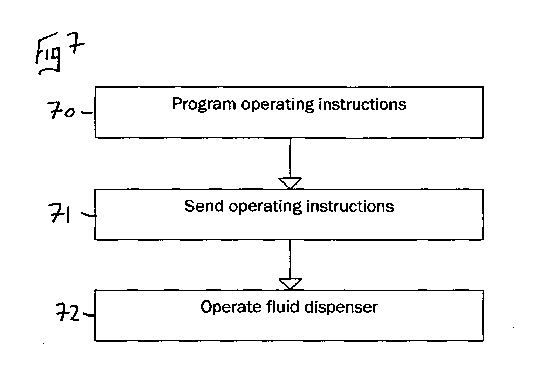

However, Figure 7 shows a flow diagram which illustrates the steps of the above method. The operating instructions are programmed into the controlling program 19 at step 70, they are then sent to the controlling program 9 at step 71, and the on-site electronic control box 2 is operated at step 72.

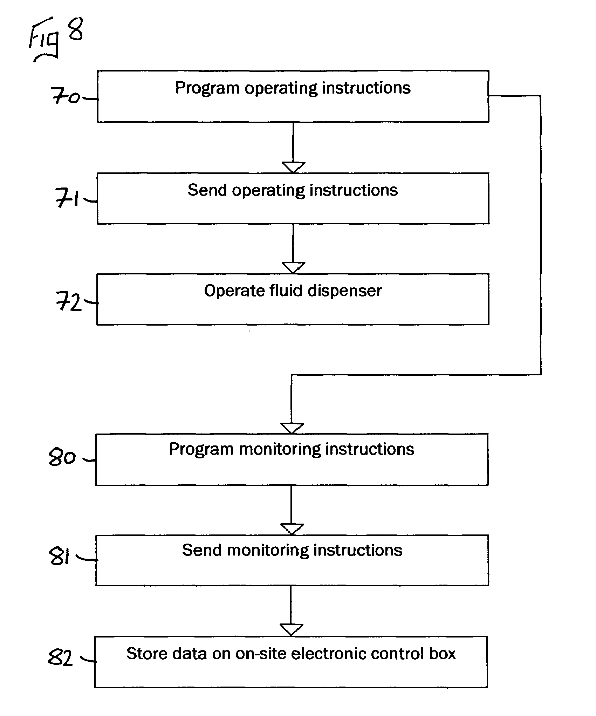

The Claims also define a number of further detailed methods, and flow diagrams relating to these methods are illustrated in Figures 8 to 11

In Figure 8 a method is similar to that shown in Figure 7, and the same reference numerals are used for like steps. However, the method also includes three additional steps. As shown in Figure 8, these other steps include programming in monitoring instructions into the monitoring program 20 as described above, at step 80, sending those instructions to the monitoring program 10 at step 81, and operating the pump 7 and storing data from the sensors in the database 11 at step 82. As is shown in Figure 8, these further steps are carried out simultaneously with the first three, and not necessarily after them in a linear fashion.

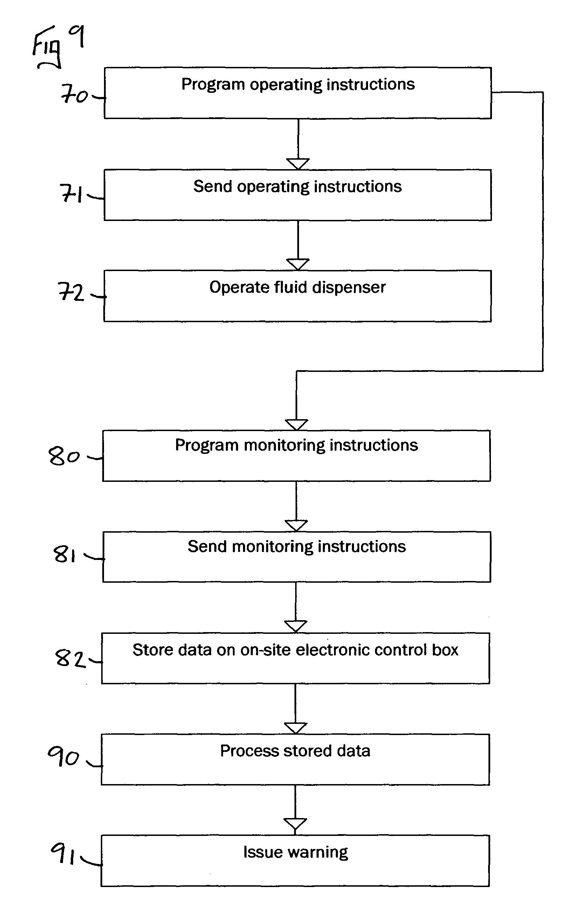

In Figure 9 a method is similar to that shown in Figure 8, but with two further steps. These are processing the stored data gathered from the pump 7 and the on-site electronic control box 2, and using the controlling program 19 and/or the monitoring program 20 to process that data, at step 90, then issuing a warning if certain criteria are fulfilled, as described above, at step 91.

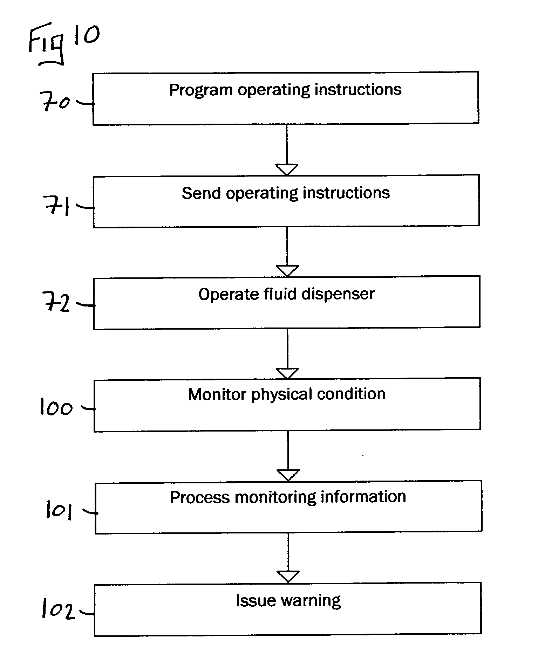

In Figure 10 a method is similar to that shown in Figure 7, except with three additional steps. These are, monitoring the physical condition of the pumps 7 or the on-site electronic control box 2 using the monitoring programs 10 and 26, at step 100, processing that data with the controlling program 19 at step 101, and issuing a warning if the data from the monitoring programs 10 and 26 indicates a fault or misuse, at step 102.

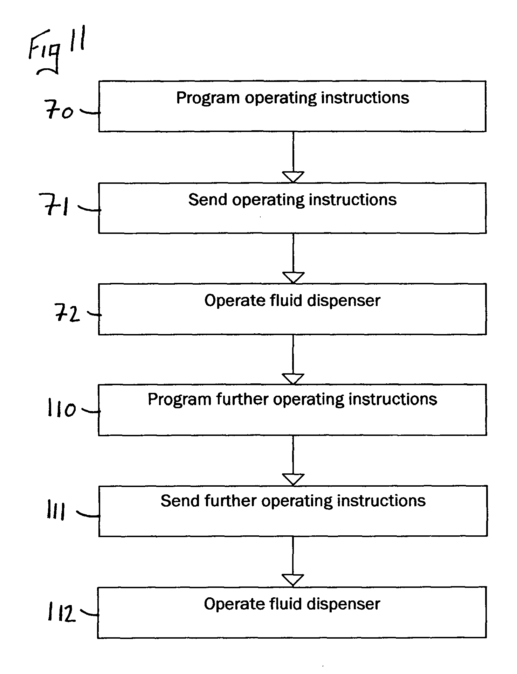

In Figure 11 a method is similar to that shown in Figure 7, except with three additional steps. These are, using the controlling program 19 to program a further set of operating instructions 22, at step 110, sending that further set of operating instructions 22 to the on-site electronic control box 2, at step 111, and using the electronic control box to operate the pump 7 according to the further set of operating instructions.

The embodiments described above can be altered without departing from the scope of Claim 1. For example, in alternative embodiments the apparatus is used with fluid dispensing means other than fluid pumps for washing machines and dishwashers. These other fluid dispensing means could be in the form of industrial fluid dispensing means which needs to be controlled, for example water supply systems, drainage systems, oil and gas supply systems and fluid dispensing systems used in manufacturing.

Further, in another alternative embodiment (not shown) a control and monitoring apparatus is similar in construction to apparatus 1 described above, however sensors are provided as part of the on site apparatus which provide data on variables which might effect the efficient running of the associated washing machine. Such sensors can monitor such variables as the water hardness, its viscosity, and the ambient temperature. This data can be collected by the monitoring program and stored as data in the database on site for future remote reference, so remote adjustment can be made via altered sets of operating instructions. Alternatively, either of the controlling programs can be set up to adjust the operating instructions automatically to compensate for a change in a variable recorded by the sensors. For example if the temperature increases beyond a given threshold the apparatus could be stopped so it does not overheat, or if the hardness of the water increases beyond a given threshold an alarm can be issued, and so on.

Thus a controlling and monitoring apparatus is provided which allows a large scale provider of chemical substances to precisely control and monitor how their products are consumed. Most importantly, this allows waste to be identified and eliminated, but it also allows minor adjustments to be made to improve the functionality of the machines consuming the chemical substances. In addition, apparatus is provided which provides a supplier with precise and clear presentations relating to various aspects of the consumption of their products, which can be used to improve supplier/consumer arrangements and save money and prevent waste. Further, apparatus is provided which warns not only on-site personnel, but also the chemical supplier in the event of any faults, emergencies, immanent depletion of product, or indeed of any potential faults in the near future. This has a significant impact on the extent of any environmental damage resulting from failures, and it saves the cost and effort of making on-site visits, which when large distances are involved also have an environmental impact.

## Claims

1. Control and monitoring apparatus for fluid dispensing means comprising a first electronic control means and a second electronic control means, in which the first electronic control means is adapted to directly control and monitor fluid dispensing means with which the apparatus is used, in which the first electronic control means and the second electronic control means are connected by means of a remote communications link, and in which the second electronic control means is adapted to remotely control and monitor the first electronic control means.

2. Control and monitoring apparatus as claimed in Claim 1 in which the first electronic control means comprises controlling means to automatically periodically operate said fluid dispensing means according to a set of pre-programmed operating instructions, and to automatically control the duration of operation and/or the quantity of fluid dispensed according to said set of pre-programmed operating instructions.

3. Control and monitoring apparatus as claimed in Claim 2 in which the first electronic control means comprises monitoring means to automatically monitor the condition and operation of said fluid dispensing means according to a set of pre-programmed monitoring instructions, and to automatically store data relating to the condition and operation of said fluid dispensing means over a period of time according to said set of pre-programmed monitoring instructions.

4. Control and monitoring apparatus as claimed in Claim 3 in which the first electronic control means and/or the second electronic control means comprises processing means adapted to calculate from said stored data the quantity of fluid which has been dispensed, and to issue a warning when a pre-determined quantity of fluid has been dispensed.

5. Control and monitoring apparatus as claimed in Claim 4 in which the processing means is adapted to calculate from said stored data the duration of use of the fluid dispensing means and/or one or more components thereof, and to issue a warning when a pre-determined duration of use of the fluid dispensing means and/or one or more components thereof, has expired.

6. Control and monitoring apparatus as claimed in Claim 5 in which the monitoring means monitors one or more physical conditions of said fluid dispensing means and/or one or more components thereof, and in which the processing means issues a warning if said one or more physical conditions of said fluid dispensing means and/or one or more components thereof, exceeds a pre-determined upper or lower limit.

7. Control and monitoring apparatus as claimed in Claim 6 in which the fluid dispensing means is provided with one or more automatic and/or manually operable emergency stop functions, and in which the monitoring means monitors the operational condition of said fluid dispensing means, and in which the processing means issues a warning if any of said one or more emergency stop functions are activated.

8. Control and monitoring apparatus as claimed in Claim 7 in which the first electronic control means further comprises means to facilitate direct manual operation of the fluid dispensing means, such that a desired quantity of fluid is dispensed.

9. Control and monitoring apparatus as claimed in Claim 8 in which the processing means issues a warning if the first electronic control means is manually operated outside of the parameters of said set of pre-programmed operating instructions.

10. Control and monitoring apparatus as claimed in Claim 9 in which the first electronic control means is provided with a manual override, operation of which prevents the second control means from being able to control the first electronic control means.

11. Control and monitoring apparatus as claimed in Claim 4 in which the second electronic control means is adapted to facilitate the programming of said set of pre-programmed operating instructions, and said set of pre-programmed monitoring instructions, and in which said set of pre-programmed operating instructions and said set of pre-programmed monitoring instructions can be changed at any time via the second electronic control means.

12. Control and monitoring apparatus as claimed in Claim 11 in which the second electronic control means comprises a visualisation means, and in which the processing means is adapted to create graphical visualisations on the visualisation means of said stored data such that characteristics of the operation and/or condition of the fluid dispensing means over a pre-determined time period can be viewed.

13. Control and monitoring apparatus as claimed in Claim 12 in which the processing means is adapted to create graphical visualisations on the visualisation means representing the real time operation and/or condition of the first electronic control means and the fluid dispensing means.

14. Control and monitoring apparatus as claimed in Claim 1 in which the first electronic control means is adapted to control and monitor fluid dispensing means comprising a number of separate fluid pumps, and in which the first electronic control means is adapted to control and monitor each fluid pump separately.

15. Control and monitoring apparatus as claimed in Claim 1 in which the first electronic control means comprises an electronic circuit housed in an outer container, which is provided with input control keys and a screen.

16. Control and monitoring apparatus as claimed in Claim 1 in which the second electronic control means comprises a computer program run on a computer, which is provided with input control keys and a screen.

17. Control and monitoring apparatus as claimed in Claim 1 in which the remote communications link is an Internet link.

18. Fluid dispensing means comprising, a first electronic control means, adapted to directly control and monitor said fluid dispensing means, and a second electronic control means adapted to remotely control and monitor the first electronic control means, in which the first electronic control means and the second electronic control means are connected by means of a remote communications link.

19. Control and monitoring apparatus for a network of fluid dispensing means comprising two or more first electronic control means and a second electronic control means, in which each first electronic control means is adapted to directly control and monitor a fluid dispensing means with which it is used, in which each first electronic control means is connected to the second electronic control means by means of a remote communications link, and in which the second electronic control means is adapted to remotely control and monitor each first electronic control means.

20. A computer program product carried by a carrier medium, comprising a controlling sub-program, a monitoring sub program and a database sub program, in which when the computer program product is run on a computer, said computer is adapted to remotely control and monitor a first electronic control means adapted to directly control and monitor fluid dispensing means with which the first electronic control means is used.

21. A method of using control and monitoring apparatus for fluid dispensing means, in which the control and monitoring apparatus comprises a first electronic control means and a second electronic control means, in which the first electronic control means is adapted to directly control and monitor fluid dispensing means with which the apparatus is used, in which the first electronic control means and the second electronic control means are connected by means of a remote communications link, and in which the second electronic control means is adapted to remotely control and monitor the first electronic control means, including the following steps:
i) Operating the second electronic control means such that a set of pre-programmed operating instructions is sent to the first electronic control means via the remote communications link;
ii) Operating the first electronic control means according to the set of pre-programmed operating instructions such that the first electronic control means automatically periodically operates said fluid dispensing means and automatically controls the duration of operation and/or the quantity of fluid dispensed.

22. The method according to Claim 21 including the following additional steps:
i) Operating the second electronic control means such that a set of pre-programmed monitoring instructions is sent to the first electronic control means via the remote communications link;
ii) Operating the first electronic control means according to the set of pre-programmed monitoring instructions such that the first electronic control means automatically monitors the condition and operation of said fluid dispensing means and automatically stores data relating to the condition and operation of said fluid dispensing means over a period of time.

23. The method according to Claim 22 including the following additional step:
i) Operating a processing means on the second electronic control means such that it calculates from said stored data the quantity of fluid which has been dispensed, and issues a warning when a pre-determined quantity of fluid has been dispensed.

24. The method according to Claim 22 including the following additional step:
i) Operating a processing means on the second electronic control means such that it calculates from said stored data the duration of use of the fluid dispensing means and/or one or more components thereof, and issues a warning when a pre-determined duration of use of the fluid dispensing means and/or one or more components thereof, has expired.

25. The method according to Claim 21 including the following additional step:
i) Operating the first electronic control means such that it monitors one or more physical conditions of said fluid dispensing means and/or one or more components thereof, and operating a processing means on the second electronic control means such that it issues a warning if said one or more physical conditions of said fluid dispensing means and/or one or more components thereof, exceeds a pre-determined upper or lower limit.

26. The method according to Claim 21, including the following additional steps:
i) Operating the second electronic control means such that a further set of pre-programmed operating instructions is sent to the first electronic control means via the remote communications link;
ii) Operating the first electronic control means according to the further set of pre-programmed operating instructions.
